(19) Europäisches Patentamt
European Patent Office
Office européen des brevets

(11) **EP 3 127 946 B1**

(12) **EUROPEAN PATENT SPECIFICATION**

(45) Date of publication and mention
of the grant of the patent:
**03.10.2018 Bulletin 2018/40**

(21) Application number: **15773259.5**

(22) Date of filing: **24.03.2015**

(51) Int Cl.:
*C08J 7/12* (2006.01)   *H01M 8/02* (2016.01)
*H01M 8/10* (2016.01)   *C08J 5/22* (2006.01)
*H01M 8/1069* (2016.01)   *H01M 8/1081* (2016.01)

(86) International application number:
**PCT/JP2015/058856**

(87) International publication number:
**WO 2015/151922 (08.10.2015 Gazette 2015/40)**

(54) **ELECTROLYTE MEMBRANE COMPRISING A SUPPORT FILM FOR SOLUTION FILM FORMING AND METHOD FOR PRODUCING THE SAME**

ELEKTROLYTMEMBRAN ENTHALTEND EINEN TRÄGERFILM ZUR LÖSUNGSFILMFORMUNG UND VERFAHREN ZU DEREN HERSTELLUNG

MEMBRANE ÉLECTROLYTIQUE COMPRENANT UN FILM DE SUPPORT POUR LA FORMATION D'UN FILM EN SOLUTION ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014   JP 2014071763**

(43) Date of publication of application:
**08.02.2017   Bulletin 2017/06**

(73) Proprietor: **Toray Industries, Inc.**
**Tokyo 103-8666 (JP)**

(72) Inventors:
• **ADACHI, Shinya**
**Otsu-shi**
**Shiga 520-8558 (JP)**

• **IZUHARA, Daisuke**
**Otsu-shi**
**Shiga 520-8558 (JP)**

(74) Representative: **Hoefer & Partner Patentanwälte mbB**
**Pilgersheimer Straße 20**
**81543 München (DE)**

(56) References cited:
**EP-A1- 2 110 874       JP-A- H01 318 074**
**JP-A- H06 192 451     JP-A- 2000 327 809**
**JP-A- 2007 114 305   JP-A- 2007 242 447**
**JP-A- 2010 056 004   JP-A- 2010 123 438**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an electrolyte membrane comprising a support film for solution film forming having a specific surface state, and a method for producing an electrolyte membrane using the support film for solution film forming.

BACKGROUND ART

A fuel cell is one kind of electrical generators which take out electric energy by electrochemically oxidizing a fuel such as hydrogen or methanol, and has received attention as a clean energy supply source, in recent years. Particularly, since a solid polymer fuel cell has a low standard working temperature of around 100°C, and has high energy density, wide application as an electrical generator for a distributed electric power generation facility of a relatively small scale or a mobile object such as an automobile or a marine vessel is expected. Further, the fuel cell also receives attention as an electric supply for small movable equipment or portable equipment, and installation into a mobile phone, a personal computer or the like, in place of secondary cells such as a nickel-metal hydride cell and a lithium ion cell, is expected.

In the fuel cell, usually, anode and cathode electrodes in which a reaction for electric power generation occurs, and a polymer electrolyte membrane which is formed from a proton conductor between the anode and the cathode constitute a membrane electrode assembly (hereinafter, abbreviated as MEA in some cases), and the fuel cell is composed of a cell as a unit comprising separators and the MEA interposed between the separators. Specifically, in the anode electrode, a fuel gas reacts in a catalyst layer to produce protons and electrons, the electrons are sent to an external circuit through an electrode, and protons are conducted to an electrolyte membrane through an electrode electrolyte. On the other hand, in the cathode electrode, an oxidation gas, protons conducted from the electrolyte membrane, and electrons conducted from the external circuit react in a catalyst layer to produce water.

In the solid polymer fuel cell, a further improvement of energy efficiency is required. Therefore, the fuel cell is configured to increase reactive points of an electrode reaction by devising an electrode structure, and to enable hydrogen ions to quickly move by compounding an electrolyte polymer also in an electrode catalyst layer. In order to enable generated hydrogen ions to quickly move to a counter electrode, it is necessary that contact between the electrode catalyst layer and the electrolyte membrane is high, and membrane resistance of an electrolyte membrane itself is reduced. For such occasions, a membrane thickness is preferably small as far as possible.

A production method of such an electrolyte membrane includes a melt film forming method and a solution film forming method as is known. Although the former can produce a film without using a solvent, it has a problem that a polymer is modified by heating. On the other hand, although the latter has a problem of facilities such as a production apparatus of a solution and a solvent recovery apparatus, a heating temperature during a film forming step may be low, and a problem of modification of a polymer can be avoided. Further, the solution film forming method also has an advantage that an electrolyte membrane which is superior in flatness and smoothness to a film formed by the former can be produced.

The solution film forming method is a method in which a solution containing an organic compound serving as a raw material and a solvent is cast on the support film to form a cast film, the cast film is dried by a drying means to form a film, the film is subjected to chemical treatment or cleaning treatment as required, and finally, a product film is separated from the support film. This method is widely used not only as a production method of an electrolyte membrane, but also as a production method of polymer films for optical use.

For example, Patent Document 1 is characterized by including a step of applying an organic polymer onto a substrate and drying the organic polymer, and a step of treating the resulting organic polymer film with a liquid without separating the film from a substrate. As a support film, a polyethylene terephthalate (PET) film is used. Further, Patent Document 2 provides a method for producing a polymer electrolyte membrane which hardly causes uneven thickness, wrinkles and asperities and is particularly extremely thin. A PET film is similarly used for the support film. Moreover, Patent Document 3 has proposed a substrate film formed by laminating a film having a releasing property at least at one surface on a support film.

Patent Document 4 teaches a polyester molding having high hydrophilicity, adhesion, printability and dyeability. The fluoropolyester molding has a surface having a water drop contact angle of 60 deg. or below and simultaneously satisfies the following formulas (1) and (2) (wherein F is the number of fluorine atoms as determined by ESCA surface elementary analysis, C is the number of carbon atoms, and O is the number of oxygen atoms: $F/(F+C+O) \geq 0.01$... (1), $O/C \geq 0.45$... (2)

Patent Document 5 teaches a method for producing a polymer electrolyte membrane in which irregularity in thickness, wrinkles and unevenness hardly occur. The method for producing a polymer electrolyte membrane includes (A) a membrane formation step of forming a membrane-form product of an ionic group-containing polymer electrolyte on a support, (B) an acid treatment step of exchanging the ionic group into an acid type by bringing the membrane into contact with an inorganic acid-containing acidic liquid, (C) an acid removal step of removing a free acid in the acid-treated membrane, and (D) a drying step of drying the acid-removed membrane, wherein the steps (B) to (D) are carried out without separating the membrane from the support.

PRIOR ART DOCUMENTS

PATENT DOCUMENTS

Patent Document 1: Japanese Patent Laid-open Publication No. 2006-21172
Patent Document 2: Japanese Patent Laid-open Publication No. 2008-181856
Patent Document 3: Japanese Patent Laid-open Publication No. 2003-285396
Patent Document 4: JPH 06192451
Patent Document 5: EP 2110874 A1

SUMMARY OF THE INVENTION

PROBLEMS TO BE SOLVED BY THE INVENTION

When solution film forming is selected as a production method of the electrolyte membrane, the points noted by the present inventors among requirements of the support film to be used includes solvent resistance of being unaffected by solvents; good coating properties in applying a polymer solution of an electrolyte membrane to the support film; heat resistance of withstanding heat during a drying step; early separation resistance for avoiding unintended separation of the polymer coating from occurring during a production process, particularly, a wetting step such as an acid-treating step and a water-washing step; easy release properties that the polymer coating can be easily separated in intentionally separating the polymer coating from the support film; and low contaminating properties of not contaminating the polymer coating.

However, in Patent Documents 1 and 2, a PET film is used. For example, in the case of the electrolyte membrane having a thickness of 25 $\mu$m or less, when peeling off the electrolyte membrane from the support film, adhesion to the PET film is high, that is, there are not easy release properties, and therefore transverse streaks or wrinkles to become an origin of membrane deterioration are easily produced in the electrolyte membrane when using the PET film for a fuel cell. Accordingly, it has been difficult to obtain an electrolyte membrane of high quality at a high yield.

In a technology described in Patent Document 3, there have been problems that during a wetting step such as an acid-treating step and a water-washing step in an electrolyte membrane production process, the electrolyte membrane is separated from the support film or water bubbles are generated. Further, it is described that when a fluorine-based film such as polytetrafluoroethylene (PTFE) is used as a support film, the support film easily gets longer and is inferior in mass production. Furthermore, there is described a problem that when a polyester film or the like the surface of which is coated with a silicone resin is used as a support film, the electrolyte membrane is contaminated with silicone of the support film leading to deterioration of proton conductivity or deterioration of catalyst performance.

In view of such a background of the prior art, the present invention provides an electrolyte membrane comprising a support film for solution film forming. The support film for solution film forming is used as a support film of the electrolyte membrane by the fact that the coating properties of a polymer solution, i.e. the wettability of a polymer solution, to the support film is high, the early separation of a polymer coating does not occur during a drying step and a wetting step such as an acid-treating step or a water-washing step, the release properties in intentionally separating the polymer coating from the support film is high, and the polymer coating is hardly contaminated by the support film.

SOLUTIONS TO THE PROBLEMS

The present inventors made earnest investigations concerning an electrolyte membrane comprising a support film for solution film forming which achieves compatibility between polymer solution's wettability, early separation resistance of not separating during a wetting step and easy release properties contradictory thereto, does not contaminate the polymer coating, and can be produced at low cost, and consequently they found that it is possible to achieve compatibility between the above-mentioned characteristics by introducing fluorine atoms in a specific ratio to a superficial layer of a general-purpose polymer film, that is, a surface on which solution film forming is performed.

In order to solve such problems, the present invention employs the following means. That is, an electrolyte membrane comprising a support film for solution film forming, the support film being formed by introducing fluorine atoms to at least one surface of a base film that is formed from one or more types of polymers selected from the group consisting of polyethylene, polypropylene, polyethylene terephthalate, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates, and polyvinyl chloride, wherein the ratio, measured by X-ray photoelectron spectroscopy, of the number of fluorine atoms/the number of carbon atoms in the surface to which the fluorine atoms are introduced, i.e. the modified surface, is 0.02 or more and 0.8 or less.

EFFECTS OF THE INVENTION

The support film for solution film forming used in the present invention is suitable for producing a polymer coating which has high surface quality and less impurities since the coating properties (referred to as wettability, in some cases) of the polymer solution to the support film during solution film forming is high, the early separation of a polymer coating does not occur during a wetting step such as an acid-treating step or a water-washing step, the release properties in intentionally separating the polymer coating from the support film for solution film forming is high, and the polymer coating is hardly contaminated by the support film. For example, the support film for solution film forming used in the present invention can be suitably used as support films for producing various functional films such as an electrolyte membrane and an optical film, and a microporous membrane having a wet-solidifying if being applications where good coating properties, easy release properties or low contaminating properties can be capitalized. The support film for solution film forming used in the present invention is optimum as a support film for solution film forming of an electrolyte membrane particularly in that the support film is excellent in the wettability, the early separation resistance during the wetting step and the release properties in intentionally separating a polymer coating.

BRIEF DESCRIPTION OF THE DRAWING

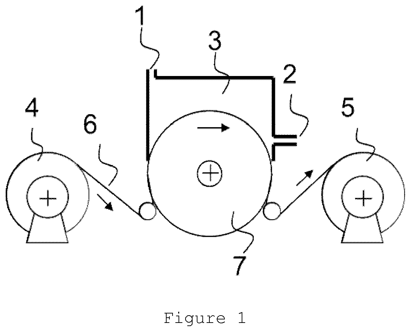

Fig. 1 shows a conceptual view of an apparatus for obtaining a support film for solution film forming used in the present invention by bringing a film into contact with a fluorine gas.

EMBODIMENTS OF THE INVENTION

<Support Film for Solution Film Forming>

As a base film serving as a base of a support film for solution film forming used in the present invention, one that is formed from one or more types of polymers selected from the group consisting of polyethylene, polypropylene, polyethylene terephthalate, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates, and polyvinyl chloride, may be used because the base film can have fluorine atoms introduced to its surface and is cheap.. When a film is formed from two or more types of polymers, the film may be formed from two or more types of blended polymers, or a laminate obtained by laminating a layer formed from each polymer may be used. From the viewpoint of cost, a monolayer film formed of one type of polymer is preferably used.
The support film for solution film forming used in the present invention is one formed by introducing fluorine atoms to at least one surface of the above-mentioned base film. In the present invention, the term "surface modification" refers to substituting fluorine atoms for part of hydrogen atoms coupled with carbon present in the surface of the base film. When the surface modification is performed, this may be further accompanied with the introduction of a hydroxyl group, a carboxylic acid group, or a sulfonic acid group. By introducing a hydroxyl group, a carboxylic acid group, or a sulfonic acid group, it is possible to decrease a contact angle on the surface of the base film, and it becomes possible to control the coating properties (wettability) of the polymer solution during solution film forming by composition and properties of the polymer solution. In addition, in the present specification, the surface to which the fluorine atoms are introduced is referred to merely as a "modified surface" in some times.
The surface modification may be performed on only one surface of the film or may be performed on both surfaces; however, it is preferred to modify only one surface in terms of cost. Further, the surface modification in which only a portion having a polymer solution for film forming applied thereto is locally fluorinated may be employed.
In the present invention, the ratio, measured by X-ray photoelectron spectroscopy, of the number of fluorine atoms/the number of carbon atoms in the modified surface to which the fluorine atoms are introduced, is 0.02 or more and 0.8 or less. Since the ratio of the number of fluorine atoms/the number of carbon atoms in the modified surface is 0.02 or more, it is possible to attain a film of high surface quality in which release properties in intentionally separating a film after film forming from the modified surface is high, and wrinkles or transverse streaks are hardly produced in the separating step. On the other hand, when the ratio of the number of fluorine atoms/the number of carbon atoms is 0.8 or less, even though a production process of a film includes a wetting step such as an acid-treating step or a water-washing step, early separation of a polymer coating during these steps can be prevented. The early separation herein refers to a phenomenon in which part of a product film is separated or floated from the support film for solution film forming without intention during the production process, and this phenomenon causes production of wrinkles in the polymer coating or damage to the polymer coating during the production process. In addition, from the viewpoint of these, the ratio of the number of fluorine atoms/the number of carbon atoms in the modified surface is preferably 0.03 or more, and more preferably 0.04 or more. Further, the ratio is preferably 0.5 or less, and more preferably 0.27 or less.

In the film used in the present invention, the ratio, measured by X-ray photoelectron spectroscopy, of the number of oxygen atoms/the number of carbon atoms in the modified surface to which the fluorine atoms are introduced, is preferably 0.10 or more and 0.60 or less. Since the ratio of the number of oxygen atoms/the number of carbon atoms is 0.10 or more, coating properties (wettability) of the polymer solution on the modified surface are high when being used as a support film for solution film forming. Further, since the ratio of the number of oxygen atoms/the number of carbon atoms is 0.60 or less, the release properties in intentionally separating a film after film forming from the modified surface is high. For example, when polyethylene terephthalate is used for a base film, it is preferred from the viewpoint of a balance between wettability and release properties that the ratio of the number of oxygen atoms/the number of carbon atoms in the modified surface is 0.40 or more and 0.50 or less.

In the X-ray photoelectron spectroscopy, the surface of a sample placed in ultrahigh vacuum is irradiated with soft X-rays, and photoelectrons emitted from the surface are detected by an analyzer. When irradiating the sample surface with X-rays under ultrahigh vacuum, photoelectrons are emitted from the surface into a vacuum by a photoelectric effect. When kinetic energy of the photoelectrons is observed, information about composition of elements and a chemical state in the surface can be obtained.

$$E_b = h\nu - E_{kin} - \phi_{sp} \qquad \text{(Formula 1)}$$

In the formula 1, $E_b$ is binding energy of bound electrons, hv is energy of soft X-rays, $E_{kin}$ is kinetic energy of photoelectrons, and $\phi$ is a work function of a spectrometer. Here, the binding energy ($E_b$) of bound electrons is inherent in an element. Therefore, analyzing energy spectrum of photoelectrons enables identification of elements present in the surface of a substance. Since a distance through which photoelectrons can travel in a substance (mean free path) is several nanometers, a detection depth in the present analytical method is several nanometers. That is, in the present invention, the ratio of the number of fluorine atoms/the number of carbon atoms and the ratio of the number of oxygen atoms/the number of carbon atoms in the modified surface are ratios of the number of atoms at a distance of several nanometers below the surface.

In the X-ray photoelectron spectroscopy, atomic information of the surface can be obtained from a value of binding energy of bound electrons in a substance, and information about a valence and a binding state can be obtained from an energy shift of each peak. Moreover, it is possible to determine a ratio of the number of atoms by using a peak area ratio. Measurement conditions of X-ray photoelectron spectroscopy used in the present invention are as follows.

Equipment: Quantera SXM (manufactured by Physical Electronics, Inc. (PHI))
Excitation X-ray: monochromatic Al K$\alpha$1 and K$\alpha$2 lines (1486.6 eV)
X-ray diameter: 100 $\mu$m (analysis region: 100 $\mu$m$\phi$)
Photoelectron escape angle: 45° (an inclination of a detector relative to a sample surface)
Smoothing: 9 points smoothing
Horizontal axis correction A main peak of C1s peak was met with 284.6 eV

Further, a contact angle ($\theta$) of water on the modified surface is preferably 35 degrees or more and 70 degrees or less. When the contact angle is 35 degrees or more, the release properties in intentionally separating a polymer coating from the support film for solution film forming is high. When the contact angle is 70 degrees or less, uneven application is hardly produced in applying the polymer solution, and a polymer coating of high surface quality is obtained. The contact angle is the most intuitive measure representing wetting of a solid by liquid. In the present invention, a value measured by a drop method was employed. Specifically, measurement was performed according to JIS R 3257. Water was added dropwise to the modified surface of the support film for solution film forming used in the present invention in place of glass, and an angle which a tangent line of a water droplet at a contact point between the modified surface and the formed water droplet with the modified surface, was measured.

A thickness of the support film for solution film forming of the present invention can be appropriately determined by a thickness of an electrolyte membrane to be produced or a production apparatus, and is not particularly limited;

however, it is preferably 5 $\mu$m to 500 $\mu$m from the viewpoint of handling. Further, the thickness of 50 $\mu$m to 200 $\mu$m is more preferred from the viewpoint of productivity and effects of reducing cost and deformation during drying.

<Method for Producing Support Film for Solution Film Forming>

A method for producing the support film for solution film forming used in the present invention is not particularly limited, and various publicly known methods can be employed. Examples of publicly known methods include fluorination by highly valent metal fluoride, indirect fluorination anchored by a halogen exchange reaction, fluorination by an electrolytic method and the like in addition to a direct fluorination reaction by a fluorine gas (Journal of Synthetic Organic Chemistry, Vol. 31, No. 6 (1973), p 441-454). Among these method, a direct fluorination reaction in which a base film is brought into contact with a fluorine gas is preferably applied from the viewpoint of mass productivity and controllability of a gas introduction amount.

Those skilled in the art can appropriately experimentally determine the control of an amount of fluorine atom introduction by a fluorine gas according to equipment or facilities to be used by adjusting a fluorine gas concentration in a gas containing a fluorine gas, a temperature or pressure of a gas containing a fluorine gas, and a transferring speed of a film in the case of continuously processing a film. It is preferred to perform the surface modification by bringing a base film into contact with a fluorine gas while continuously transferring the base film from the viewpoint of cost and quality stability for applications requiring mass productivity such as a support film for continuous solution film forming.

One example of an apparatus which brings a film into contact with a fluorine gas while continuously transferring the film, is shown in Fig. 1 as a conceptual view. The surface modification is carried out in a fluorine-gas contacting chamber 3 equipped with a gas supply port 1 and a gas discharge port 2 while continuously transferring a film substrate 6 from a winding off part 4 to a winding part 5. A supporting roll 7 is configured to minimizing leakage of a fluorine gas. Further, the supporting roll 7 can control a temperature in the fluorination reaction by incorporating a heater or a coolant.

<Method for Producing Electrolyte Membrane>

Hereinafter, a method for producing an electrolyte membrane using the support film for solution film forming will be described. The support film for solution film forming used in the present invention can be suitably used as a support film in a method for producing an electrolyte membrane having the following steps:

step 1: a step of applying an electrolyte polymer solution onto a modified surface of a support film;
step 2: a step of removing a solvent from the electrolyte polymer solution applied in the step 1 to form an electrolyte polymer coating on the modified surface;
step 3 : a step of bringing the electrolyte polymer coating formed in the step 2 with the support film into contact with an acidic solution; and
step 4: a step of separating the electrolyte polymer coating obtained in the step 3 from the support film. Herein, "electrolyte polymer" includes an electrolyte precursor polymer which becomes an electrolyte by subsequent processing.

In the wetting step such as the above step 3, if the electrolyte polymer coating is early separated from the support film, the electrolyte membrane is broken and the wrinkle is produced. When the support film for solution film forming used in the present invention is used as a support film, it becomes possible to produce the electrolyte membrane without causing such early separation.

The above-mentioned method for producing an electrolyte membrane is suitable in continuously preparing an electrolyte membrane having a density of an acid group of 1.0 mmol/g or more. The reason for this is that break of a membrane due to swelling, and a wrinkle and surface defect during drying can be prevented by bringing the electrolyte polymer coating into contact with an acidic solution or the like without separating the coating from the support film. When an electrolyte membrane having an acid group density of 1.5 mmol/g or more and 3.5 mmol/g or less is continuously produced, the above production method is particularly suitable.

It is preferred to employ the above method for producing an electrolyte membrane irrespective of magnitude of the acid group density also when a thickness of the electrolyte membrane to be produced is small. The reason for this is that when the electrolyte polymer coating alone is brought into contact with the acidic solution, mechanical strength in liquid swelling is deteriorated and break of a membrane tends to occur during production, wrinkles are produced during drying to easily cause surface defects, and therefore a transferring system for preventing these phenomena tends to be expensive in the method of performing a wetting step such as contacting with an acidic solution after separating the electrolyte membrane from the support film. Specifically, when an electrolyte membrane having a thickness of 30 $\mu$m or less at the time of drying is produced, there is particularly a high need to bring the electrolyte membrane or the electrolyte membrane precursor into contact with the acidic solution without separating the electrolyte membrane or the electrolyte membrane precursor, and when the thickness is 20 $\mu$m or less, the need becomes higher.

Further, when carrying out a step of transferring a catalyst layer or a step of applying a catalyst ink to the electrolyte membrane, or carrying out a step of bonding an electrode substrate with a catalyst to the electrolyte membrane by a hot press or the like, these steps include a step of separating the electrolyte membrane from the support film. When adhesion between the support film and the electrolyte membrane is too high, the electrolyte membrane cannot be separated well, and wrinkles or break of a membrane may occur. However, when the support film for solution film forming used in the present invention is used as a support film, the release properties in separating the electrolyte membrane is high, and defects such as wrinkles or membrane break can be reduced.

Examples of the electrolyte membrane suitably produced by the method as described above include aromatic hydrocarbon-based polymers having an ionic group such as ionic group-containing polyphenylene oxide, ionic group-containing polyether ketone, ionic group-containing polyether ether ketone, ionic group-containing polyether sulfone, ionic group-containing polyether ether sulfone, ionic group-containing polyether phosphine oxide, ionic group-containing poly(ether ether phosphine oxide), ionic group-containing polyphenylene sulfide, ionic group-containing polyamide, ionic group-containing polyimide, ionic group-containing polyetherimide, ionic group-containing polyimidazole, ionic group-containing polyoxazole and ionic group-containing polyphenylene; and perfluoro-based ion-conducting polymers having an ionic group which is composed of a fluoroalkylether side chain and a fluoroalkylether main chain.

As the ionic group referred to herein, one type or more selected from the group consisting of a sulfonic acid group ($-SO_2$ (OH)), a sulfuric acid group ($-OSO_2(OH)$), a sulfonimide group ($-SO_2NHSO_2R$ (R represents an organic group)), a phosphonic acid group ($-PO(OH)_2$), a phosphoric acid group ($-OPO(OH)_2$), a carboxylic acid group ($-CO(OH)$) and metal salt thereof, can be preferably employed. Among these, it is more preferred to have at least any one of the sulfonic acid group, the sulfonimide group, the sulfuric acid group and the phosphonic acid group in terms of high proton conductivity, and it is the most preferred to have at least the sulfonic acid group in terms of hydrolysis resistance.

In solution film forming, it is preferred that these ionic groups are preferably introduced as a metal salt in order to mitigate mixing of impurities due to a material of a film forming apparatus and decomposition of the ionic group by heating, and in this case, the metal salt can be replaced with a proton and converted to an ionic group by bringing the metal salt into contact with an acidic solution after film forming. A metal for forming a metal salt may be a metal capable of forming a salt with the ionic group. From the viewpoint of its price and environmental burden, it is preferably Li, Na, K, Rb, Cs, Mg, Ca, Sr, Ba, Ti, V, Mn, Fe, Co, Ni, Cu, Zn, Zr, Mo, and W, and among these metals, Li, Na, K, Ca, Sr, and Ba are more preferred, and Li, Na, and K are moreover preferred.

Introduction of the ionic group in the electrolyte membrane may be performed by a method of introducing a metal salt or a derivative of the ionic group in a polymer after polymerization, or by a method in which a metal salt of the ionic group is introduced in a monomer, and then the monomer is polymerized.

Further, when an electrolyte precursor polymer is used, the electrolyte precursor polymer may contain a hydrolyzable group. The hydrolyzable group referred to herein refers to a substituent which is primarily introduced for the purpose of eliminating or modifying at least part of the hydrolyzable group in a subsequent step, and an example thereof includes an aspect in which a hydrolyzable group for enhancing solubility is introduced in order to interfere with crystallization in the process of solution film forming, and hydrolysis is performed after film forming.

An example of a method for producing an electrolyte membrane using an electrolyte precursor polymer containing a hydrolyzable group, includes a method in which a ketone site of crystalline polyether ketone is protected by an acetal or ketal site, and crystallinity is broken by steric hindrance to make the polyether ketone soluble in a solvent. By introducing an ionic group in a part of an aromatic ring of the polyether ketone to form an electrolyte containing a hydrolyzable group and an ionic group, preparation of an electrolyte precursor polymer solution and application of the solution to a substrate become easy, and an electrolyte membrane which is excellent in water resistance and solvent resistance can be obtained by hydrolyzing the hydrolyzable group through acid treatment to be returned to a ketone bond. Further, the hydrolyzable group can also be removed by heating or electron beams. In addition, with the same thought as in the present invention, a protective group other than the hydrolyzable group may be employed in order to impart solubility. From the viewpoint of continuous production of the electrolyte membrane, the hydrolyzable group is the most preferred. Specific examples of the hydrolyzable group include the groups described in Japanese Patent Laid-open Publication No. 2006-261103.

A solvent used in solution film forming is not particularly limited as long as the electrolyte polymer can be dissolved or dispersed in the solvent, and it can be appropriately experimentally selected. For example, an aprotic polar solvent such as N,N-dimethylacetamide, N,N-dimethylformamide, N-methyl-2-pyrrolidone, dimethyl sulfoxide, sulfolane, 1,3-dimethyl-2-imidazolidinone, or hexamethylphosphonetriamide; an ester-type solvent such as $\gamma$-butyrolactone or butyl acetate; a carbonate-type solvent such as ethylene carbonate or propylene carbonate; or an alkylene glycol monoalkyl ether such as ethylene glycol monomethyl ether, ethylene glycol monoethyl ether, propylene glycol monomethyl ether, or propylene glycol monoethyl ether, is suitably used, and these solvents may be used singly or may be used as a mixture of two or more thereof.

For viscosity adjustment of the electrolyte polymer solution, various low boiling point solvents may be mixed and used, and examples of the low boiling point solvents include alcohol-type solvents such as methanol and isopropanol; ketone-type solvents such as acetone and methyl ethyl ketone; ester-type solvents such as ethyl acetate, butyl acetate and ethyl lactate; hydrocarbon-type solvents such as hexane and cyclohexane; aromatic hydrocarbon-type solvents such as benzene, toluene and xylene; halogenated hydrocarbon-type solvents such as chloroform, dichloromethane, 1,2-dichloroethane, dichloromethane, perchloroethylene, chlorobenzene and dichlorobenzene; ether-type solvents such as diethyl ether, tetrahydrofuran and 1,4-dioxane; nitrile-type solvents such as acetonitrile; and nitrated hydrocarbon-type solvents such as nitromethane and nitroethane.

As a method of applying an electrolyte polymer solution, publicly known methods can be employed, and techniques such as knife coating, direct roll coating (comma coating), gravure printing, spray coating, brush coating, dip coating, die coating, vacuum die coating, curtain coating, flow coating, spin coating, reverse coating and screen printing, are applicable, and die coating and comma coating are suitable for continuous coating.

Publicly known methods such as heating, hot air and an infrared heater may be selected for evaporation of a solvent from the polymer coating applied onto the support film used in the present invention. A time, temperature, wind velocity and direction for solvent-evaporation can be appropriately experimentally determined.

Further, when the method for producing an electrolyte membrane has, as a wetting step, a step of bringing the polymer coating formed of the electrolyte precursor polymer into contact with an acidic solution, publicly known solutions can be usually used as the acidic solution, and an aqueous solution of inorganic acid such as hydrochloric acid, sulfuric acid, phosphoric acid or nitric acid is suitable. Particularly, sulfuric acid is preferred from the viewpoint of productivity and workability. While, a concentration and a temperature of the acidic solution can be appropriately experimentally determined, with respect to the concentration, a 0.1% to 30% aqueous solution is preferred, and a 1% to 20% aqueous solution is more preferred from the viewpoint of productivity and workability. With respect to the temperature, 40°C or higher is preferred in a temperature range of room temperature to 80°C in order to shorten a processing time.

Examples of the method of bringing the polymer coating into contact with the acidic solution include a method of guiding the polymer coating to an acidic solution bath while continuously separating the polymer coating from the support film, and a method in which the polymer coating is cut into leaflets, the leaflets are fixed to a dedicated frame, and the frame is immersed in an acidic solution bath in a batch type manner.

This process has a washing step of a free acid and a liquid-droplet removing step after the step of bringing the polymer coating into contact with the acidic solution, and publicly known methods can also be employed for these steps, and with respect to washing of a free acid, it is preferred to combine immersion in a water bath and showering to wash the electrolyte membrane until a pH of a wash solution becomes 6 to 8.

For the liquid-droplet removing step, a method of blowing a gas such as compressed air, or a method of absorbing liquid-droplets by a cloth, a sponge roll or a nonwoven fabric roll or a method of absorbing liquid-droplets by combining these rolls with a depressurizing pump are preferably used.

The drying step after removing liquid-droplets is performed principally for the purpose of controlling a water content of the electrolyte membrane, and drying conditions are appropriately experimentally determined based on requirements of a subsequent step. Drying conditions which do not cause wrinkles, warpage or breaks are preferred. Examples of countermeasures for particularly preventing wrinkles include method of fixing a membrane through frame stretching or with a tenter and suction roll, and thereby shrinkage of the membrane due to drying can be prevented. In the case of continuous processing, it is preferred to use the tenter and suction roll.

[EXAMPLES]

hereinafter, the present invention will be described in more detail by way of examples concerning a support film for solution film forming which uses a polyethylene terephthalate film as a substrate. The present invention is not limited to these examples. The surface modification of polyethylene, polypropylene, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates, and polyvinyl chloride, may also be prepared according to the present examples. In addition, measuring conditions of the respective physical properties are as follows.

(1) Ratio of Number of Fluorine Atoms/Number of Carbon Atoms in Film Surface (F/C Ratio)

In the present invention, a value measured by X-ray photoelectron spectroscopy is employed. Since a distance through which photoelectrons can travel in a substance (mean free path) is several nanometers, a detection depth in the present analytical method is several nanometers, the ratio of the number of fluorine atoms/the number of carbon atoms of the present invention is a ratio of the number of atoms at a distance of several nanometers below the surface, and the ratio was expressed on the carbon atom basis (C/C = 1). One example of measurement conditions of X-ray photoelectron spectroscopy is described below. In addition, the ratio of the number of oxygen atoms/the number of carbon atoms (O/C ratio) can also be acquired by the same method.
Equipment: Quantera SXM (manufactured by Physical Electronics, Inc. (PHI))
Excitation X-ray: monochromatic Al K$\alpha$1 and K$\alpha$2 lines (1486.6 eV)
X-ray diameter: 100$\mu$m (analysis region: 100 $\mu$m$\phi$)
Photoelectron escape angle: 45° (an inclination of a detector relative to a sample surface)
Smoothing: 9 points smoothing
Horizontal axis correction: A main peak of C1s peak was met with 284.6 eV

(2) Contact Angle of Water

A contact angle of water was measured by a method according to JIS R 3257 (1999).

(3) Wettability Evaluation

A polymer solution formed of a 20 wt% of precursor of sulfonated poly (ether ketone) (refer to Japanese Patent Laid-Open Publication No. 2006-561103) and N-methyl-2-pyrrolidone (NMP) was applied by casting onto a support film for solution film forming, and surface quality of a coated film before drying was visually observed and evaluated.

(4) Evaluation of Early Separation Resistance

After the wettability evaluation described above, the coated film was dried at 100°C, immersed in a 10 wt% aqueous solution of sulfuric acid at 60°C for 10 minutes as a wetting step, and then immersed in pure water for 30 minutes, and the presence or absence of separation of the polymer coating was visually observed from above the support film for solution film forming to evaluate the separation.

(5) Evaluation of Easy Release Properties

After the evaluation of early separation resistance described above, a water content of the polymer coating was evaporated at 80°C, the polymer coating was manually separated from the support film for solution film forming, and a state of wrinkle of the separated polymer coating was evaluated by visual observation.

[Example 1]

A PET film ("Lumirror" (registered trademark) T60 produced by Toray Industries Inc., thickness: 125 $\mu$m) was put in a 20 L pressure vessel made of stainless steel equipped with a supply port and a discharge port of a fluorine gas and air, a nitrogen gas was blown into the vessel at a flow rate of 100 ml/min to purge the inside of the vessel for 1 hour, and then a mixed gas of fluorine and air in proportions of 10 : 90 by volume was blown into the vessel at a flow rate of 10 ml/min to react the PET film with the mixed gas for 10 minutes.
Subsequently, a nitrogen gas was blown into the vessel at a flow rate of 100 ml/min to purge the mixed gas for 1 hour, and the vessel was opened to obtain a support film for solution film forming A.
The ratio of the number of fluorine atoms/the number of carbon atoms and the ratio of the number of oxygen atoms/the number of carbon atoms in the processed surface of the support film for solution film forming A, a contact angle of water, wettability, early separation resistance, and easy release properties are summarized in Table 1.

[Examples 2, 3, 4, 5 and Comparative Example 1]

Production was performed varying a ratio between fluorine and air of a mixed gas of fluorine and air of Example 1 or varying an injection time of the mixed gas to obtain support films for solution film forming B to F. The ratio of the number of fluorine atoms/the number of carbon atoms and the ratio of the number of oxygen atoms/the number of carbon atoms in each of these support films, a contact angle of water, wettability, early separation resistance, and easy release properties are summarized in Table 1.

[Example 6]

Using a continuous fluorine surface treatment apparatus which has a roll-shaped film winding off part capable of controlling a transferring speed and a film winding part, and has, therebetween, a fluorine-gas contacting chamber including a supply port and a discharge port of a fluorine gas and air, the surface modification of the PET film ("Lumirror" (registered trademark) T60 produced by Toray Industries Inc., thickness: 125 $\mu$m) was continuously performed at a transferring speed of 1 m/min while blowing the mixed gas of fluorine and air (volume ratio of 30 : 70) at a flow rate of 10 ml/min into the fluorine-gas contacting chamber to obtain a continuously processed membrane of a support film for solution film forming G. The ratio of the number of fluorine atoms/the number of carbon atoms and the ratio of the number of oxygen atoms/the number of carbon atoms in the processed surface of the support film for solution film forming G, a contact angle of water, wettability, early separation resistance, and easy release properties are summarized in Table 1.

[Comparative Example 2]

A support film for solution film forming was prepared in the same manner as in Example 6 except for changing the PET film ("Lumirror" (registered trademark) T60 produced by Toray Industries Inc., thickness: 125 $\mu$m) to a poly-tetrafluoroethylene film. The ratio of the number of fluorine atoms/the number of carbon atoms, the ratio of the number of oxygen atoms/the number of carbon atoms, a contact angle of water, wettability, early separation resistance, and easy release properties are summarized in Table 1.

[Example of Use of Support Film for Solution Film Forming]

A polymer solution formed of a 20 wt% of precursor of sulfonated poly(ether ketone) (refer to Japanese Patent Laid-Open Publication No. 2006-561103) and N-methyl-2-pyrrolidone (NMP) was continuously applied by casting onto the modified surface of the support film for solution film forming G using a slit die coater, and a solvent was removed in a hot air drying furnace at 150°C to form a coating, having a thickness of 12 $\mu$m, of the precursor of sulfonated poly(ether ketone) on the support film for solution film forming G. In this time, the polymer solution exhibited good wettability and did not have a defect such as repellency, and early separation of the coating of the precursor of sulfonated poly (ether ketone) was not found during drying.

Next, the coating of the precursor of sulfonated poly(ether ketone) was continuously immersed with the support film for solution film forming G in a 10 wt% aqueous solution of sulfuric acid at 60°C for 30 minutes, repeatedly washed with pure water until a wash solution becomes neutral, and dried at 80°C for 10 minutes. In this time, the coating of sulfonated poly (ether ketone) was not early separated from the support film for solution film forming G, and did not cause wrinkles or break of a membrane and had high surface quality.

When a sulfonated poly(ether ketone) electrolyte membrane was manually separated from the support film for solution film forming A, it could be easily separated, and therefore a sulfonated poly (ether ketone) electrolyte membrane which has less surface defect such as wrinkles and has a thickness of 10 $\mu$m, was obtained.

Table 1

| | Processing Condition | | | Results | | | | | |
|---|---|---|---|---|---|---|---|---|---|
| | Fluorine/Air Ratio | Processing Time | Processing Temperature | F/C Ratio | O/C Ratio | Contact Angle | Wettability | Early Separation | Easy Release Properties |
| | (volume ratio) | (minute) | (°C) | (Ratio of Number of Atoms) | (Ratio of Number of Atoms) | (°) | | | |
| Example 1 | 10/90 | 10 | 25 | 0.115 | 0.400 | 61 | good | none | good |
| Example 2 | 10/90 | 60 | 25 | 0.197 | 0.473 | 44 | good | none | good |
| Example 3 | 5/95 | 10 | 25 | 0.037 | 0.420 | 70 | good | none | good |
| Example 4 | 20/80 | 1 | 100 | 0.268 | 0.488 | 35 | good | none | good |
| Example 5 | 20/80 | 10 | 100 | 0.282 | 0.610 | 33 | good | slightly present | good |
| Example 6 | 30/70 | 5 | 50 | 0.062 | 0.440 | 68 | good | none | good |
| Comparative Example 1 | 0/100 | 10 | 25 | 0.000 | 0.380 | 72 | partially repellent | none | wrinkle occurs |
| Comparative Example 2 | - | - | - | 2.000 | 0.000 | 100 | repellent | present | - |

DESCRIPTION OF REFERENCE SIGNS

1: Gas supply port
2: Gas discharge port
3: Fluorine-gas contacting chamber
4: Film winding off part
5: Film winding up part
6: Film substrate
7: Support roll

**Claims**

1. An electrolyte membrane comprising a support film for solution film forming, the support film being formed by introducing fluorine atoms to at least one surface of a base film that is formed from one or more types of polymers selected from the group consisting of polyethylene, polypropylene, polyethylene terephthalate, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates, and polyvinyl chloride, wherein the ratio, measured by X-ray photoelectron spectroscopy, of the number of fluorine atoms/the number of carbon atoms in the surface to which the fluorine atoms are introduced, i.e. the modified surface, is 0.02 or more and 0.8 or less.

2. The electrolyte membrane according to claim 1, wherein a contact angle of water on the modified surface, determined according to JIS R 3257 is 35 degrees or more and 70 degrees or less.

3. The electrolyte membrane according to claim 1 or 2, wherein the introduction of fluorine atoms was performed by bringing the base film into contact with a fluorine gas.

4. The electrolyte membrane according to any one of claims 1 to 3, wherein the ratio, measured by X-ray photoelectron spectroscopy, of the number of oxygen atoms/the number of carbon atoms in the modified surface is 0.10 or more and 0.60 or less.

5. A method for producing an electrolyte membrane comprising:

   step 1: a step of applying an electrolyte polymer solution onto a modified surface of a support film;
   step 2: a step of removing a solvent from the electrolyte polymer solution applied in the step 1 to form an electrolyte polymer coating on the modified surface;
   step 3: a step of bringing the electrolyte polymer coating formed in the step 2 with the support film into contact with an acidic solution; and
   step 4: a step of separating the electrolyte polymer coating obtained in the step 3 from the support film,

   wherein as the support film, the support film for solution film forming as defined in any one of claims 1 to 4 is used.

**Patentansprüche**

1. Elektrolytmembran umfassend einen Trägerfilm zur Bildung eines Lösungsfilms, wobei der Trägerfilm durch Einbringen von Fluoratomen auf mindestens eine Oberfläche eines Basisfilms gebildet wird, der aus einer oder mehreren Polymertypen, ausgewählt aus der Gruppe bestehend aus Polyethylen, Polypropylen, Polyethylenterephthalat, Polybutylenterephthalat, Polyethylennaphthalat, Polyphenylensulfid, Polysulfonen, Polyetherketon, Polyetheretherketon, Polyimiden, Polyetherimid, Polyamiden, Polyamidimiden, Polybenzimidazolen, Polycarbonaten, Polyarylaten und Polyvinylchlorid gebildet ist, wobei das Verhältnis, das durch Röntgenphotoelektronenspektroskopie gemessen wird, aus der Anzahl der Fluoratome / der Anzahl der Kohlenstoffatome in der Oberfläche, in die die Fluoratome eingeführt werden, d.h. der modifizierten Oberfläche, 0,02 oder mehr und 0,8 oder weniger beträgt.

2. Elektrolytmembran nach Anspruch 1, wobei ein Kontaktwinkel von Wasser auf der modifizierten Oberfläche, der gemäß JIS R 3257 bestimmt wird, 35 Grad oder mehr und 70 Grad oder weniger beträgt.

3. Elektrolytmembran nach Anspruch 1 oder 2, wobei das Einbringen von Fluoratomen durch in Kontakt bringen des Basisfilms mit einem Fluorgas durchgeführt wurde.

4. Elektrolytmembran nach einem der Ansprüche 1 bis 3, wobei das Verhältnis, das durch Röntgenphotoelektronenspektroskopie gemessen wird, aus der Anzahl der Sauerstoffatome / der Anzahl der Kohlenstoffatome in der modifizierten Oberfläche 0,10 oder mehr und 0,60 oder weniger beträgt.

5. Verfahren zur Herstellung einer Elektrolytmembran umfassend:

Schritt 1: einen Schritt des Auftragens einer Elektrolytpolymerlösung auf eine modifizierte Oberfläche eines Trägerfilms;
Schritt 2: einen Schritt des Entfernens eines Lösungsmittels von der in Schritt 1 aufgebrachten Elektrolytpolymerlösung, um eine Elektrolytpolymerbeschichtung auf der modifizierten Oberfläche zu bilden;
Schritt 3: einen Schritt des in Kontakt bringens der in dem Schritt 2 gebildeten Elektrolytpolymerbeschichtung mit dem Trägerfilm mit einer sauren Lösung; und
Schritt 4: einen Schritt des Abtrennens der in Schritt 3 erhaltenen Elektrolytpolymerbeschichtung von dem Trägerfilm,

wobei als Trägerfilm der Trägerfilm zur Bildung des Lösungsfilms nach einem der Ansprüche 1 bis 4 verwendet wird.

## Revendications

1. Membrane électrolytique comprenant un film de support pour former un film en solution, le film de support étant formé en introduisant des atomes de fluor sur au moins une surface d'un film de base qui est formé d'un ou de plusieurs type(s) de polymères choisis dans le groupe constitué de polyéthylène, de polypropylène, de polyéthylène téréphtalate, de polybutylène téréphtalate, de polyéthylène naphtalate, de polysulfure de phénylène, de polysulfones, de polyéthercétone, de polyétheréthercétone, de polyimides, de polyétherimide, de polyamides, de polyamideimides, de polybenzimidazoles, de polycarbonates, de polyarylates, et de polychlorure de vinyle, où le rapport, mesuré par spectroscopie de photoélectrons X, du nombre d'atomes de fluor / le nombre d'atomes de carbone dans la surface sur laquelle les atomes de fluor sont introduits, c'est-à-dire la surface modifiée, est supérieur ou égal à 0,02 et inférieur ou égal à 0,8.

2. Membrane électrolytique selon la revendication 1, dans laquelle l'angle de contact de l'eau sur la surface modifiée, déterminé selon la norme JIS R 3257, est supérieur ou égal à 35 degrés et inférieur ou égal à 70 degrés.

3. Membrane électrolytique selon la revendication 1 ou 2, dans laquelle l'introduction d'atomes de fluor a été effectuée en mettant le film de base en contact avec du fluor gazeux.

4. Membrane électrolytique selon l'une quelconque des revendications 1 à 3, dans laquelle le rapport, mesuré par spectroscopie de photoélectrons X, du nombre d'atomes d'oxygène / le nombre d'atomes de carbone dans la surface modifiée est supérieur ou égal à 0,10 et inférieur ou égal à 0,60.

5. Procédé de production d'une membrane électrolytique comprenant :

étape 1 : une étape qui consiste à appliquer une solution de polymère électrolytique sur une surface modifiée d'un film de support ;
étape 2 : une étape qui consiste à éliminer un solvant de la solution de polymère électrolytique appliquée à l'étape 1 pour former un revêtement de polymère électrolytique sur la surface modifiée ;
étape 3 : une étape qui consiste à mettre le revêtement de polymère électrolytique formé à l'étape 2 avec le film de support en contact avec une solution acide ; et
étape 4 : une étape qui consiste à séparer le revêtement de polymère électrolytique obtenu à l'étape 3 du film de support,

où, le film de support pour la formation d'un film en solution tel que défini dans l'une quelconque des revendications 1 à 4 est utilisé comme étant le film de support.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006021172 A
- JP 2008181856 A
- JP 2003285396 A
- JP H06192451 B
- EP 2110874 A1
- JP 2006261103 A
- JP 2006561103 A

**Non-patent literature cited in the description**

- *Journal of Synthetic Organic Chemistry,* 1973, vol. 31 (6), 441-454